# EUROPEAN PATENT APPLICATION

(11) **EP 4 335 650 A1**
(43) Date of publication of application: **13.03.2024**
(21) Application number: 23183002.7
(22) Date of filing: 03.07.2023
(51) Int. Cl.: B41J 29/02, B41J 29/13, F16F 9/02, F16F 9/36, F16F 9/48, F16F 9/516, E05F 1/10

(54) **PRINTER APPARATUS AND CUSHIONING MEMBER**

(30) Priority: 21.07.2022 JP 2022116604
(71) Applicant: Toshiba TEC Kabushiki Kaisha, Tokyo 141-8562 (JP)
(72) Inventor: Ise, Tokihiko, Tokyo, 141-8562 (JP)
(74) Representative: Bandpay & Greuter

(57) **Abstract**

There is provided a printer apparatus (1) including a cushioning member (36) coping with a weight increase of an upper cover (21). The printer apparatus includes a lower housing (22), the upper cover, and the cushioning member. The lower housing has an opening on one surface. The upper cover is rotatably connected to the lower housing and covers the opening. The cushioning member includes a cylinder (365) that is fixed to the lower housing and has a cylindrical shape with different inner diameters in a longitudinal direction, a piston (367) that can reciprocate along the longitudinal direction in the cylinder, and a piston rod (366) that moves the piston along an inner wall of the cylinder and is fixed to the upper cover.

## Description

### FIELD

Embodiments described herein relate generally to a printer apparatus and a cushioning member.

### BACKGROUND

In the related art, printers using roll paper are widely used. The printer includes a lower housing that accommodates the roll paper and an upper cover that opens and closes the lower housing. The printer further includes a cushioning member (for example, a torsion spring) in order to prevent the upper cover from being rapidly closed. The cushioning member is attached to a hinge that rotatably connects the lower housing and the upper cover.

However, when a supply (for example, an ink ribbon) accommodated in the upper cover increases due to a demand of a user, a size of the housing increases and a load supporting the upper cover increases, resulting in insufficient effect of the related-art cushioning member. Therefore, there is room for further improvement in the cushioning member.

To this end, there is provided a printer apparatus and a cushioning member according to appended claims.

### DESCRIPTION OF THE DRAWINGS

FIG. 1 is a perspective view showing an example of an external appearance of a printer according to an embodiment when viewed from a front side;
FIG. 2 is a cross-sectional view schematically showing an example of an internal configuration and structure of the printer;
FIG. 3 is a cross-sectional view schematically showing an example of an internal configuration and structure of a cushioning member;
FIG. 4 is a cross-sectional view schematically showing an example of an internal structure of a cylinder;
FIG. 5 is a cross-sectional view schematically showing an example of an internal configuration and structure of a part of a piston;
FIG. 6 is a perspective view showing an example of an external appearance of a first packing; and
FIG. 7 is a perspective view showing an example of an external appearance of a second packing.

### DETAILED DESCRIPTION

In general, according to one embodiment, a printer apparatus including a cushioning member coping with a weight increase of an upper cover is provided.

A printer apparatus according to an embodiment includes a lower housing, an upper cover, and a cushioning member. The lower housing has an opening on one surface. The upper cover is rotatably connected to the lower housing and covers the opening. The cushioning member includes a cylinder that is fixed to the lower housing and has a cylindrical shape with different inner diameters in a longitudinal direction, a piston that can reciprocate along the longitudinal direction in the cylinder, and a piston rod that moves the piston along an inner wall of the cylinder and is fixed to the upper cover.

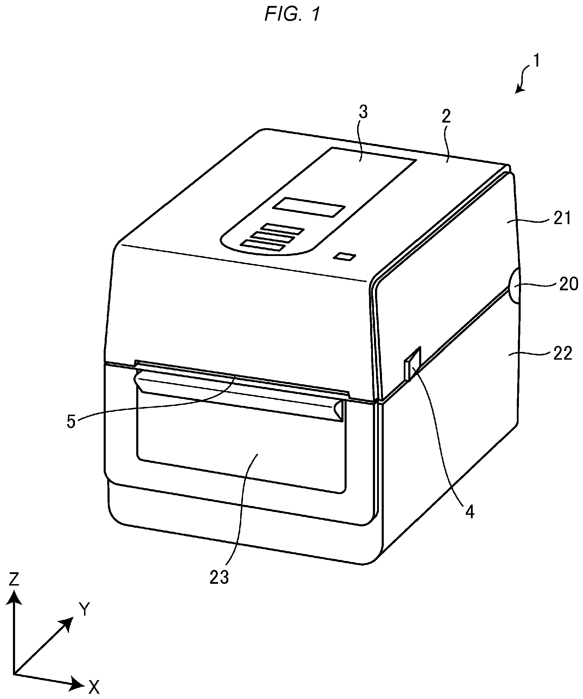

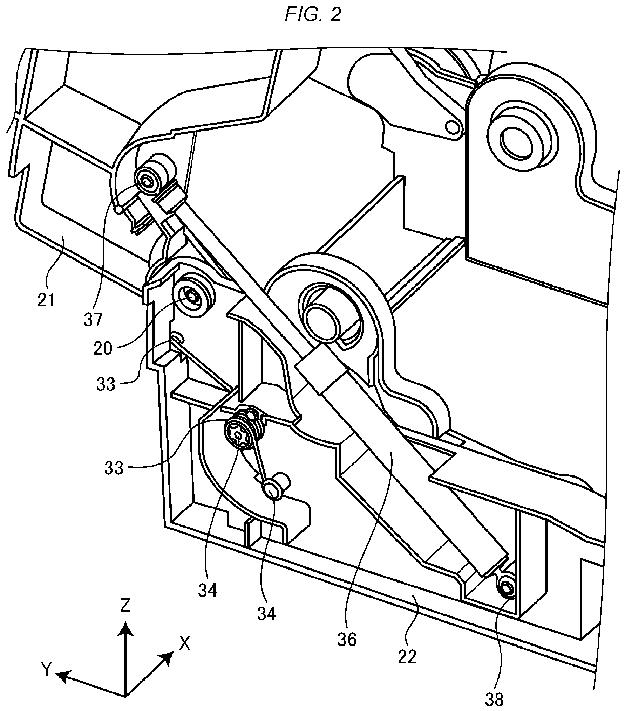

An embodiment will be described with reference to the drawings. FIG. 1 is a perspective view showing an example of an external appearance of a printer according to the embodiment when viewed from a front side. FIG. 2 is a cross-sectional view schematically showing an example of an internal configuration and structure of the printer according to the embodiment.

A three-dimensional coordinate system is also shown for convenience of description. A width direction (left-right direction) of a printer 1 is an X-axis direction, a depth direction (front-rear direction) thereof is a Y-axis direction, and a height direction (upper-lower direction) is a Z-axis direction. A positive direction of a Y axis is a direction from a near side to a far side, and a state viewed in the positive direction of the Y axis is a front view.

A positive direction of a Z axis is a direction from an upper side to a lower side, and a state viewed in the positive direction of the Z axis is a plan view. Further, a positive direction of an X axis is a direction from a left side to a right side in the front view. A left side portion and a right side portion when the printer 1 and each portion are viewed from the front side (the positive direction of the Y axis) may be referred to as both side portions.

The printer 1 is an example of a printer apparatus. The printer 1 includes a housing 2, a display operation unit 3, an open and close button 4, and an issuing port 5. The housing 2 includes an upper cover 21 and a lower housing 22. The upper cover 21 covers an opening of the lower housing 22. Specifically, a side of the upper cover 21 on a rear surface side is rotatably attached to the lower housing 22 by a hinge 20, and the opening of the lower housing 22 in an upper surface is opened and closed with the rotation.

The hinge 20 is a connecting member that rotatably connects the upper cover 21 and the lower housing 22. The hinge 20 includes a biasing member 33 (for example, a torsion spring) fixed to a side surface of the lower housing 22 at one end by a first fixing member 34 (for example, a screw). The biasing member 33 is a member that slows down movement of the upper cover 21 when the upper cover 21 closes the lower housing 22, more specifically, for example, a member that biases the upper cover 21 in a direction in which the lower housing 22 is opened.

The upper cover 21 is rotatably connected to the lower housing 22 and covers the opening. The upper cover 21 accommodates a printing unit (not shown). The printing unit prints on paper while conveying the paper, and includes a print head, an ink ribbon, and a platen roller (all not shown). The print head is fixed to an inner surface of the upper cover 21, and is brought into close contact with the platen roller while the upper cover 21 closes the opening in the upper surface of the lower housing 22.

The print head is, for example, a thermal head, and includes a plurality of heating elements provided in parallel. The print head prints on the paper sandwiched between the print head and the platen roller by heat from the heating elements while the paper and the ink ribbon are sandwiched between the print head and the platen roller. The platen roller rotates due to transmission of a driving force of a stepping motor, and conveys the paper sandwiched between the platen roller and the print head.

The display operation unit 3 is provided on an upper surface of the upper cover 21. The display operation unit 3 receives input of various operations and displays various types of information. The open and close button 4 is provided on a side surface portion of the upper cover 21 on the near side, and receives an operation of releasing a locked state of a lock structure that holds the upper cover 21 on the lower housing 22.

The lower housing 22 has the opening on one surface. More specifically, the lower housing 22 has the upward opening, and the opening is closed by the upper cover 21. A part of a front surface of the lower housing 22 is formed by a front cover 23.

The issuing port 5 is an opening for issuing (discharging) the paper such as a receipt, and is provided between an upper end portion of the front cover 23 and a lower end portion of a front surface of the upper cover 21. The front cover 23 includes a paper discharge guide 51 at the upper end portion thereof. The paper discharge guide 51 guides the paper discharged from the issuing port 5.

The lower housing 22 accommodates a paper holding unit (not shown). The paper holding unit stores, for example, roll paper in which strip-shaped paper is rolled in a roll shape, and rotatably holds the roll paper. Examples of the roll paper include a receipt roll and a label roll. The receipt roll is formed by rolling strip-shaped receipt paper (an example of paper).

The receipt paper is a strip-shaped paper that becomes a receipt when printed and cut. The label roll is formed by rolling strip-shaped label paper (an example of paper). The label paper includes a label with a strip-shaped base paper in which the label is attached to the base paper, and a strip-shaped label. The label has an adhesive layer on a back side of a printed surface.

Since the upper cover 21 includes the print head, the ink ribbon, and the platen roller, a weight of the upper cover 21 increases. When the weight of the upper cover 21 is heavy, the upper cover 21 may not be supported and maintained in an open state only by the biasing member 33 of the hinge 20. In this case, for example, although a user wants to maintain the upper cover 21 in the open state, the upper cover 21 freely falls and becomes closed.

Therefore, the printer 1 according to the present embodiment includes, inside the housing 2, a cushioning member 36 that supports the upper cover 21 by supplementing a function of the biasing member 33. Similarly to the above-described biasing member 33, the cushioning member 36 serves to slow down the movement of the upper cover 21 when the upper cover 21 closes the lower housing 22.

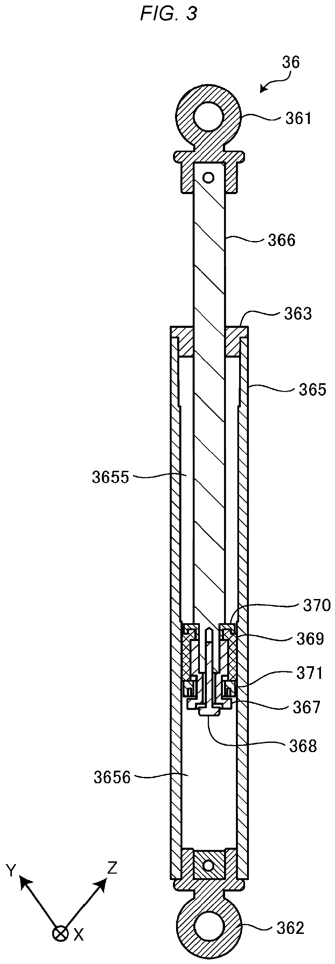

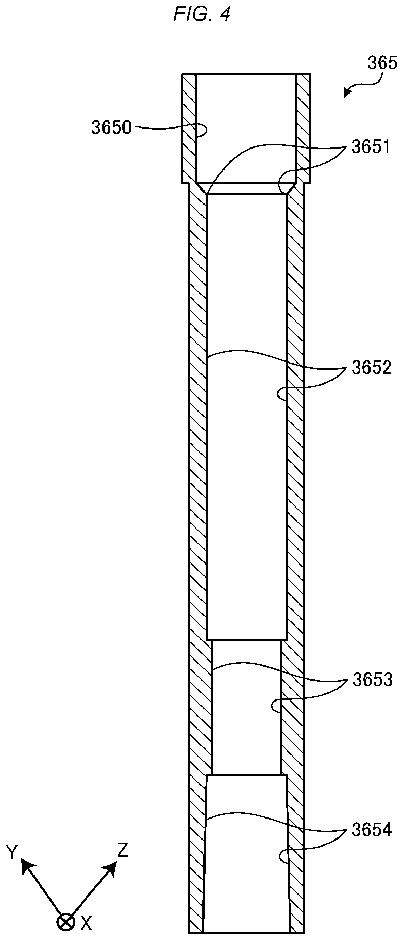

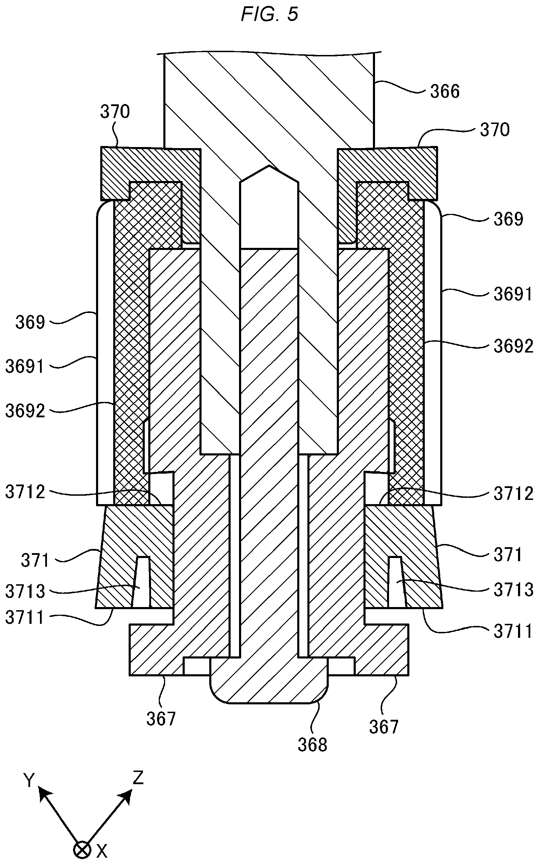

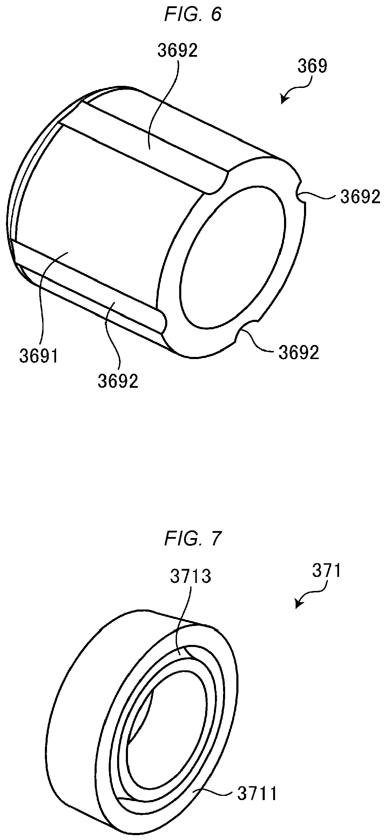

Next, a configuration of the cushioning member 36 will be described with reference to FIGS. 3, 4, 5, 6 and 7. FIG. 3 is a cross-sectional view schematically showing an example of an internal configuration and structure of the cushioning member 36 according to the embodiment. FIG. 4 is a cross-sectional view schematically showing an example of an internal structure of a cylinder according to the embodiment. FIG. 5 is a cross-sectional view schematically showing an example of an internal configuration and structure of a part of a piston according to the embodiment. FIG. 6 is a perspective view showing an example of an external appearance of a first packing according to the embodiment.

FIG. 7 is a perspective view showing an example of an external appearance of a second packing according to the embodiment.

The cushioning member 36 is an example of an air damper. The cushioning member 36 is provided on at least one end side (a left side in FIG. 2) of the housing 2, and is fixed to the upper cover 21 and the lower housing 22. Specifically, the cushioning member 36 is fixed to the upper cover 21 by a second fixing member 37 (for example, a screw) via a first fastening member 361.

The cushioning member 36 is fixed to the lower housing 22 by a third fixing member 38 (for example, a screw) via a second fastening member 362. The cushioning member 36 is not limited to one end side of the housing 2, and may be provided on both end sides of the housing 2, for example.

The cushioning member 36 includes a cylinder 365 that is fixed to the lower housing 22 and has a cylindrical shape with different inner diameters in a longitudinal direction, a piston 367 that can reciprocate along the longitudinal direction in the cylinder 365, and a piston rod 366 that moves the piston 367 along an inner wall of the cylinder 365 and is fixed to the upper cover 21. In the cushioning member 36, a packing attached to the piston 367 swings with respect to the inner wall (inner peripheral surface).

One end portion of the cylinder 365 is closed by the second fastening member 362. The other end portion of the cylinder 365 is closed by a first cap 363, and the piston rod 366 provided at a center of the piston 367 when viewed from a movement direction of the piston 367 extends to the outside of the cylinder 365 through the first cap 363.

The cylinder 365 includes a plurality of steps on a cylindrical inner wall. As shown in FIG. 4, an inner peripheral surface of the cylinder 365 is divided into a first inner wall 3650, a first step 3651, a second inner wall 3652, a second step 3653, and a third inner wall 3654 in this order from one opening to the other opening.

First, an inner diameter of the second inner wall 3652 is set to a reference dimension suitable for reciprocation of the piston 367. Next, the first inner wall 3650 initially receives the piston 367 inserted into the cylinder 365. A diameter of the first inner wall 3650 is set to be larger than the diameter of the second inner wall 3652.

The first step 3651 is an inclined surface connecting the first inner wall 3650 and the second inner wall 3652, and serves to guide the piston 367 inserted into the cylinder 365. With such a structure, when the piston 367 is inserted into the cylinder 365, the piston 367 reaches the second inner wall 3652 having the reference dimension through the first step 3651 that gradually narrows from the first inner wall 3650 wider than the second inner wall 3652, and thus the insertion is facilitated.

An inner diameter of the second step 3653 is smaller than the inner diameter of the second inner wall 3652. An inner diameter of the third inner wall 3654 is larger than the inner diameter of the second step 3653, and is substantially equal to the inner diameter of the second inner wall 3652 in the present embodiment.

The second step 3653 is provided to increase an internal pressure inside the cylinder 365 immediately before the upper cover 21 is closed and to prevent the upper cover 21 from being rapidly closed. Since the second step 3653 is provided, there is an effect that the cylinder 365 can be easily removed from a mold when the cylinder 365 is molded.

In the present embodiment, the inner diameter of the third inner wall 3654 is larger than the inner diameter of the second step 3653. Here, if the inner diameter of the third inner wall 3654 is equal to that of the second step 3653, a high pressure state of the cylinder 365 continues until immediately before the upper cover 21 is completely closed. In this case, the user needs to press the upper cover 21 with a strong force to completely close the upper cover 21.

In order to avoid this inconvenience, the inner diameter of the third inner wall 3654 is made larger than the inner diameter of the second step 3653 so as not to apply a large operating force for opening and closing. Accordingly, the pressure inside the cylinder 365, which rises at a portion of the second step 3653 while the upper cover 21 is being closed, changes to be low immediately before the upper cover 21 is completely closed.

The piston rod 366 moves the piston 367 in cooperation with the upper cover 21. The first fastening member 361 is fixed to one end portion of the piston rod 366. The piston 367 is fixed to the other end portion of the piston rod 366 by a third fixing member 368.

In cooperation with the piston rod 366, the piston 367 moves along the inner wall of the cylinder 365 with an air flow moving from a gap between the cylinder 365 and the piston 367. The piston 367 is fixed to the piston rod 366 by the third fixing member 368.

The piston 367 includes, on an outer peripheral surface of the piston 367, a packing inscribed with the cylinder 365. The packing is, for example, an example of a first packing 369 and a second packing 371. The first packing 369 and the second packing 371 are, for example, elastic members made of rubber or the like. The piston 367 divides the interior of the cylinder 365 into two spaces, a first chamber 3655 and a second chamber 3656 (see FIG. 3).

The first packing 369 has a cylindrical shape. For example, first grooves 3692 are formed in a first side surface (outer peripheral surface) 3691 of the first packing 369 (see FIG. 6). The first groove 3962 is a groove for generating an air flow from one of the first chamber 3655 and the second chamber 3656 to the other when the piston 367 moves inside the cylinder 365.

The first packing 369 is fixed to the piston 367 by being provided between a second cap 370 and the second packing 371.

The second packing 371 has a truncated cone shape and a cylindrical shape. Here, a bottom surface (lower base) of a truncated cone is denoted by 3711, and an upper surface (upper base, top surface) is denoted by 3712. A diameter of the upper surface 3712 is smaller than a diameter of the bottom surface 3711. The upper surface 3712 is located on one side (first cap 363 side) of the second packing 371, and the bottom surface 3711 is located on the other side (second fastening member 362 side) thereof.

A second groove 3713 is formed in a surface corresponding to the bottom surface 3711. The second groove 3713 has, for example, a concentric circular shape along an edge of the bottom surface 3711 (a circular shape around a rotation axis of the truncated cone) (see FIG. 7).

The upper surface 3712 receives a pressure from a gas inside the cylinder 365 when the upper cover 21 is to be opened. When an area of the upper surface 3712 is small, a load when the piston 367 moves with respect to the cylinder 365 is small, and the upper cover 21 can be easily opened.

By increasing the diameter of the bottom surface 3711, the pressure inside the cylinder 365 can be easily received when the upper cover 21 is closed. Further, by forming the second groove 3713 in a part of the bottom surface 3711, the bottom surface 3711 can more easily receive the pressure inside the cylinder 365 when the upper cover 21 is closed. The second packing 371 having such a configuration can easily receive the pressure from the gas inside the cylinder 365 between the piston 367 and the cylinder 365, and a movement speed of the piston 367 slows down. Therefore, the upper cover 21 is gradually closed while absorbing the shock.

As described above, the printer 1 according to the present embodiment includes the cushioning member 36 including the cylinder 365 that is fixed to the lower housing 22 and has a cylindrical shape with different inner diameters in a longitudinal direction, the piston 367 that can reciprocate along the longitudinal direction in the cylinder 365, and the piston rod 366 that moves the piston 367 along an inner wall of the cylinder 365 and is fixed to the upper cover 21.

Therefore, in the printer 1 according to the present embodiment, by providing the cushioning member 36, the upper cover 21 can be supported, for example, even when a supply accommodated in the upper cover 21 is large and a load supporting the upper cover 21 is large. Since the cushioning member 36 is, for example, an air damper, a constant operating force can be maintained for opening and closing the upper cover 21.

The cylinder 365 includes a plurality of steps on a cylindrical inner wall, the piston 367 includes, on an outer peripheral surface of the piston 367, a packing (second packing 371) inscribed with the cylinder 365, the packing (second packing 371) has a truncated cone shape, and a concentric circular groove is formed in a surface corresponding to the bottom surface 3711 of a truncated cone.

Therefore, by providing the steps, for example, the cushioning member 36 can increase an internal pressure inside the cylinder 365 immediately before the upper cover 21 is closed and prevent the upper cover 21 from being rapidly closed.

The packing (second packing 371) inscribed with the cylinder 365 has the truncated cone shape, and by forming the groove in a part of the bottom surface 3711 of the truncated cone, the pressure inside the cylinder 365 can be more easily received when the upper cover 21 of the printer 1 is closed, for example. The bottom surface 3711 of the second packing 371 can easily receive a pressure from a gas inside the cylinder 365 between the piston 367 and the cylinder 365, and a movement speed of the piston 367 slows down. Therefore, the upper cover 21 is gradually closed while absorbing the shock.

The upper surface 3712 of the second packing 371 is smaller than an area of the bottom surface 3711. For example, in a case where the upper cover 21 of the printer 1 is to be opened, compared to a case where the upper cover 21 of the printer 1 is to be closed, a load when the piston 367 moves with respect to the cylinder 365 is small, and the upper cover 21 can be easily opened.

The above-described embodiment can be appropriately modified and implemented by changing a part of the configuration or function of the above-described apparatus. Therefore, hereinafter, modifications related to the above-described embodiment will be described as other embodiments. In the following description, differences from the above-described embodiment will be mainly described, and detailed description of points common to the already described contents will be omitted. Further, the modifications described below may be implemented individually or in combination as appropriate.

### Modification

In the above-described embodiment, the second step 3653 is provided inside the cylinder 365 such that inner diameters are different in the longitudinal direction, but the embodiment is not limited thereto. For example, a tapered (gradient) shape may be formed inside the cylinder 365 such that inner diameters are different in the longitudinal direction.

While certain embodiments have been described, these embodiments have been presented by way of examples only, and are not intended to limit the scope of the disclosure. These novel embodiments can be implemented in various forms, and various omissions, substitutions, modifications, and combinations may be made without departing from the scope of the disclosure. These embodiments and modifications thereof are included in the scope of the disclosure and are also included in the disclosure described in the scope of claims and an equivalent scope thereof.

## Claims

1. A printer apparatus, comprising:
a lower housing (22) having an opening on one surface;
an upper cover (21) rotatably connected to the lower housing and configured to cover the opening; and
a cushioning member (36) including a cylinder (365) fixed to the lower housing and having a cylindrical shape with a plurality of different inner diameters in a longitudinal direction, a piston (367) that reciprocates along the longitudinal direction in the cylinder, and a piston rod (366) configured to move the piston along an inner wall of the cylinder and fixed to the upper cover.

2. The printer apparatus according to claim 1, wherein
the cylinder includes a plurality of steps on the cylindrical inner wall.

3. The printer apparatus according to claim 1 or 2, wherein
the piston includes, on an outer peripheral surface of the piston, a packing inscribed with the cylinder.

4. The printer apparatus according to claim 3, wherein
the packing has a truncated cone shape, and a concentric circular groove is formed in a surface corresponding to a bottom surface of a truncated cone.

5. The printer apparatus according to any one of claims 1 to 4, wherein
the cushioning member is an air damper.

6. The printer apparatus according to any one of claims 1 to 5, wherein
the upper cover is rotatably connected to the lower housing via a hinge including a biasing member fixed to a side surface of the lower housing at one end by a first fixing member.

7. The printer apparatus according to claim 6, wherein
the biasing member is a torsion spring and the first fixing member is a screw.

8. The printer apparatus according to claim 6 or 7, wherein
the biasing member is configured to decrease a speed of movement of the upper cover when the upper cover closes on the lower housing.

9. The printer apparatus according to any one of claims 6 to 8, further comprising a print head exposed when the upper cover is in an open position.

10. The printer apparatus according to any one of claims 2 to 9, the cylinder (365) having an inner peripheral surface divided into, in the following order from one opening to the other opening, a first inner wall (3650), a first step (3651), a second inner wall (3652), a second step (3653), and a third inner wall (3654) wherein the diameter of the first inner wall (3650) is set to be larger than the diameter of the second inner wall (3652).

11. The printer apparatus according to claim 10, wherein an inner diameter of the second step (3653) is smaller than the inner diameter of the second inner wall (3652), an inner diameter of the third inner wall (3654) is larger than the inner diameter of the second step (3653).

12. A cushioning member for a printer apparatus, comprising:
a cylinder having a cylindrical shape with a plurality of different inner diameters in a longitudinal direction and including a plurality of steps on an inner wall having the cylindrical shape;
a piston configured to reciprocate along the longitudinal direction in the cylinder and including, on an outer peripheral surface, a packing having a truncated cone shape and inscribed with the cylinder; and
a piston rod configured to move the piston along the inner wall of the cylinder.

13. The cushioning member according to claim 12, wherein
the cylinder includes a plurality of steps on the cylindrical inner wall.

14. The cushioning member according to claim 12 or 13, wherein
the piston includes, on an outer peripheral surface of the piston, a packing inscribed with the cylinder.

15. The cushioning member according to claim 14, wherein
the packing has a truncated cone shape, and a concentric circular groove is formed in a surface corresponding to a bottom surface of a truncated cone.
